# EUROPÄISCHE PATENTSCHRIFT

(11) **EP 3 175 209 B1**
(45) Veröffentlichungstag und Bekanntmachung des Hinweises auf die Patenterteilung: **30.12.2020**
(21) Anmeldenummer: 14747351.6
(22) Anmeldetag: 30.07.2014
(51) Int. Cl.: G01L 19/00, G01L 19/06, G01L 19/14, G01L 9/00

(54) **PROZESSANSCHLUSS**
PROCESS CONNECTION
RACCORD DE PROCESSUS

(43) Veröffentlichungstag der Anmeldung: 07.06.2017
(73) Patentinhaber: VEGA Grieshaber KG, 77709 Wolfach (DE)
(72) Erfinder: ILG, Thomas, 77716 Haslach (DE)
(74) Vertreter: Patentanwälte Bauer Vorberg Kayser
(86) Internationale Anmeldenummer: PCT/EP2014/066339
(87) Internationale Veröffentlichungsnummer: WO 2016/015758

(56) Entgegenhaltungen:
- EP-A1- 2 455 737
- EP-A2- 1 167 938
- DE-A1- 3 907 202
- DE-C1- 4 234 289

## Beschreibung

Die vorliegende Erfindung betrifft eine Druckmessanordnung mit einem Prozessanschluss gemäß dem Obergebriff des Patentanspruchs 1, sowie ein Verfahren zum Herstellen einer Druckmessanordnung mit einem solchen Prozessanschluss gemäß dem Oberbegriff des Patentanspruchs 13.

Aus dem Stand der Technik sind verschiedene Prozessanschlüsse und Druckmessanordnungen mit Prozessanschlüssen bekannt, wobei im Stand der Technik Druckmesszellen mit einer Einbahnordnung eine Druckmesszelle üblicherweise radial fassen und mittels radial und axial angeordneter Dichtungen gegenüber einer vorderseitig der Druckmesszelle befindlichen Prozessumgebung abdichten. Insbesondere in der chemischen und pharmazeutischen Industrie, aber auch in der Lebensmittelindustrie, muss diesbezüglich ein großer Aufwand betrieben werden, um eine spaltfrei und hinreichend dichte Anbindung der Druckmesszelle an die Prozessumgebung zu gewährleisten.

Aus EP 2 455 737 A1 sind keramische Prozessanschlüsse für Druckmesszelle bekannt, die einen Befestigungsabschnitt zur Befestigung mit einem Gehäuse und eine Keramikmembran aufweisen. Die Keramikmembran dient als Messmembran für die Druckmesszelle.

Es wird dabei als nachteilig empfunden, dass die aus dem Stand der Technik bekannten Ausführungsformen einerseits hinsichtlich ihrer Dichtigkeit aufgrund von thermischen Effekten sowie aufgrund einer Korrosion bzw. Alterung des verwendeten Dichtungsmaterials nicht dauerhaft dicht ausgestaltet werden können. Es wird außerdem als nachteilig empfunden, dass die bislang bekannten Anordnungen nicht diffusionsdicht sind und da mit eine Diffusion von Bestandteilen aus der Prozessumgebung in Richtung der Druckmesszelle nicht vermieden werden kann. Es wird außerdem bei aus dem Stand der Technik bekannten Anbindungsvarianten nur mit großem Aufwand möglich, eine spaltfreie Anbindung der Druckmesszelle an eine Prozessumgebung zu erreichen.

Bei den üblicherweise aus Edelstahl, Titan oder Kunststoff gefertigten Prozessanschlüssen gemäß dem Stand der Technik wird es außerdem als nachteilig befunden, dass aufgrund von unterschiedlichen thermischen Ausdehnungskoeffizienten im Vergleich zu keramischen Druckmesszellen weitere Dichtigkeitsprobleme auftreten können. Ferner sind unterschiedliche Beständigkeiten der einzelnen Werkstoffe ebenfalls vom Nachteil.

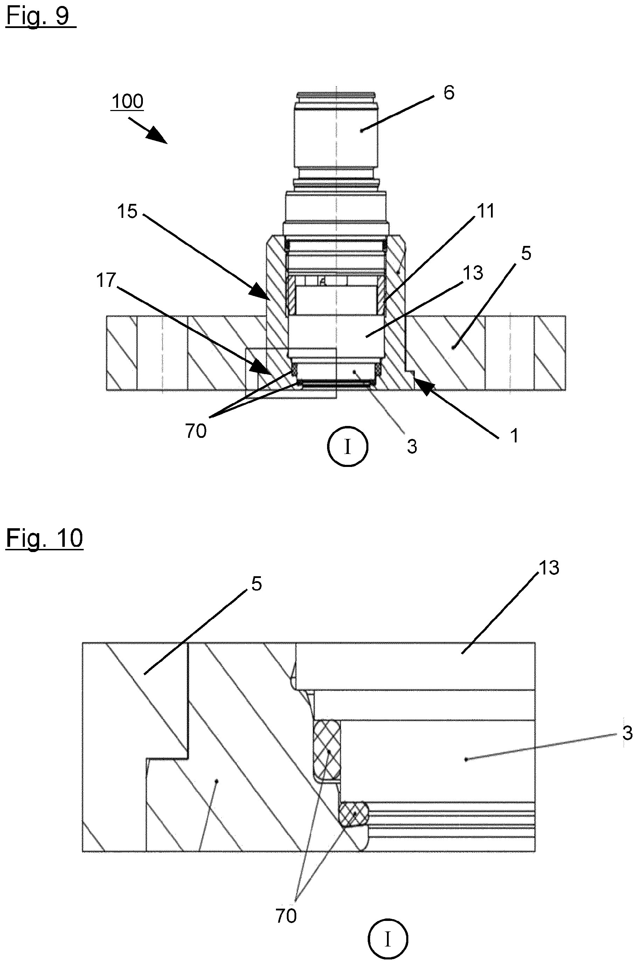

Eine aus dem Stand der Technik bekannte Anordnung ist in den Figuren 9 und 10 dargestellt.

Figur 9 zeigt eine keramische Druckmesszelle 3, die in einem aus Edelstahl gefertigten Prozessanschluss 1 angeordnet ist. Der Prozessanschluss 1 weist einen Aufnahmeabschnitt 17, in dem die Druckmesszelle 3 aufgenommen ist, und einen Befestigungsabschnitt 15 zur Befestigung des Prozessanschlusses 1 an beispielsweise einem Flansch 5 sowie zur Halterung der Druckmesszelle 3 innerhalb des Prozessanschlusses 1 auf. Rückseitig ist an dem Prozessanschluss 1 ein Gehäuseanschluss 6 angeordnet, an dem beispielsweise ein Messgerätegehäuse oder ein zu einer Messwarte führendes Messkabel befestigt sein kann.

Der Prozessanschluss 1 selbst kann an dem Flansch 5 beispielsweise über eine umlaufende Verschweißung oder an dem Prozessanschluss 1 und dem Flansch 5 korrespondierende zueinander angeordnete Gewinde befestigt sein.

Die Druckmesszelle 3 ist in dem Prozessanschluss 1 über einen Mitnehmer 13 der rückseitig von einem Spannring 11, der in ein Innengewinde des Prozessanschlusses 1 eingreift gehaltert und in Richtung einer Prozessumgebung I gespannt. Eine Abdichtung zur Prozessumgebung I hin erfolgt durch vorderseitig und radial angeordnete Dichtung 70, die beispielsweise als O-Ring oder Formdichtungen ausgeführt sein können. Die Anordnung dieser Dichtungen 70 ist besonders deutlich in Figur 10 zu erkennen.

Wie bereits angedeutet sind die bekannten Prozessanschlüsse aufgrund der verwendeten Materialien Korrosion und Alterung unterworfen und können aufgrund unterschiedlicher Ausdehnungskoeffizienten der verwendeten Materialien keine absolute Dichtigkeit, insbesondere Diffusionsdichtigkeit, gewährleisten.

Hier setzt die vorliegende Erfindung an.

Es ist die Aufgabe der vorliegenden Erfindung, eine Druckmessanordnung sowie ein Verfahren zur Herstellung einer solchen Druckmessanordnung derart weiterzubilden, dass die aus dem Stand der Technik bekannten Nachteile überwunden werden. Diese Aufgabe wird durch, eine Druckmessanordnung mit den Merkmalen des Patentanspruchs 1, sowie ein Verfahren zum Herstellen einer Druckmessanordnung mit den Merkmalen des Verfahrens des Patentanspruchs 13 gelöst.

Weiterbildungen der Erfindung sind in abhängigen Patentansprüchen widergegeben.

Eine erfindungsgemäße Druckmessanordnung mit einer in einem Prozessanschluss angeordneten Druckmesszelle, wobei der Prozessanschluss zur Aufnahme einer Druckmesszelle und der Ankopplung derselben an eine Prozessumgebung ausgebildet ist, weist einen Befestigungsabschnitt und einen Aufnahmeabschnitt mit einem Aufnahmeraum für wenigstens einen Grundkörper der Druckmesszelle auf, wobei der Prozessanschluss wenigstens in einem an die Prozessumgebung grenzenden Abschnitt aus Keramik gefertigt ist und zumindest eine den Aufnahmeraum zur Prozessumgebung hin abschließende Keramikmembran umfasst, und zeichnet sich dadurch aus, dass die Druckmesszelle eine eigene Messmembran aufweist, die mit der Keramikmembran verbunden ist.

Als Prozessanschluss im Sinne der vorliegenden Anmeldung wird eine Anordnung verstanden, die geeignet ausgebildet ist, eine Druckmesszelle an eine Prozessumgebung anzukoppeln, d. h. insbesondere derart anzukoppeln, dass eine zu messende Prozessgröße an die Messzelle im Wesentlichen unmittelbar angekoppelt wird. Ein Druckmittler, wie er in der Füllstandsmesstechnik häufig eingesetzt wird, bei dem eine Übermittlung der zu messenden Messgröße an die Druckmesszelle unter Zwischenschaltung eines zusätzlichen Mediums erfolgt, soll insbesondere nicht als Prozessanschluss im Sinne der vorliegenden Anmeldung verstanden werden.

Der vorliegenden Erfindung liegt die Erkenntnis zugrunde, dass durch die Verwendung von Keramik zumindest in einem an die Prozessumgebung grenzenden Abschnitt gegenüber den bekannten Ausführungen deutliche Vorteile hinsichtlich der Festigkeit, Diffusionsdichtigkeit sowie allgemeiner Dichtigkeit erzielt werden können. Insbesondere dadurch, dass die vorliegende Anordnung zur Prozessumgebung hin komplett dichtungsfrei, d. h. insbesondere ohne die Verwendung polymerhaltiger Dichtungen aufgebaut ist, unterliegt sie deutlich geringeren Alterungserscheinungen als die aus dem Stand der Technik bekannten Anordnungen. Dadurch, dass bei Verwendung einer keramischen Druckmesszelle zusammen mit einem wenigstens abschnittsweise kera mischen Prozessanschluss auf Materialien mit annähernd identischen - oder vollständig identischen - thermischen Ausdehnungskoeffizienten zurückgegriffen werden kann entstehen im Vergleich zum Stand der Technik auch deutlich weniger thermisch induzierte Probleme.

In einer besonders bevorzugten Ausgestaltungsform sind der Aufnahmeabschnitt und die Keramikmembran einstückig ausgebildet. Bei der einstückigen Ausgestaltung von Keramikmembran und Aufnahmeabschnitt kann ein vollständig nahtloser Übergang geschaffen werden, wodurch zur Prozessumgebung hin eine vollständig geschlossene spaltfreie Oberfläche mit einheitlichen Material- und Oberflächeneigenschaften erreicht werden kann.

Vorzugsweise ist auch der Befestigungsabschnitt aus Keramik gefertigt, so dass idealerweise ein vollständig aus Keramik gefertigter Prozessanschluss erreicht wird.

In einer Weiterbildung der Erfindung weist der Befestigungsabschnitt wenigstens ein Gewinde, vorzugsweise ein Außengewinde und/oder ein Innengewinde auf, wodurch der Prozessanschluss beispielsweise in einen Flansch einschraubbar und die Druckmesszelle in dem Prozessanschluss befestigbar ist.

Wie bereits erwähnt, kann insbesondere der Aufnahmeabschnitt aus Keramik gefertigt sein. An einem aus Keramik gefertigten Aufnahmeabschnitt kann dann besonders einfach die Keramikmembran alternativ zu einer einstückigen Ausgestaltung befestigt sein. Ein derartiger Aufbau, bei dem die Keramikmembran an dem Aufnahmeabschnitt befestigt ist, kann insbesondere dann vorteilhaft sein, wenn die Keramikmembran beispielsweise aufgrund ihrer Dimensionierung und/oder aufgrund weiterer Prozessschritte separat hergestellt werden muss. Dies kann beispielsweise der Fall sein, wenn die Keramikmembran besonders dünn ausgestaltet und/oder metallisch beschichtet ist.

Ein solche separat hergestellte Keramikmembran kann an den Aufnahmeabschnitt beispielsweise angeglast sein. Durch eine solche Verbindung mit einem Glaslot wird eine mechanisch stabile und insbesondere medien- und diffusionsdichte Verbindung zwischen der Keramikmembran und dem Aufnahmeabschnitt hergestellt, so dass auch in diesem Fall keine zusätzlichen Dichtmittel notwendig sind.

In der Regel wird der Aufnahmeabschnitt einen Durchmesser aufweisen, der größer ist als ein Durchmesser der Keramikmembran, so dass außenseitig der an dem Aufnahmeabschnitt befestigten Keramikmembran eine umlaufende Stufe entsteht.

Die so entstehende Stufe kann in Richtung zur Prozessumgebung hin durch einen an dem Aufnahmeabschnitt angeordneten Ausgleichsring ausgeglichen werden.

Die Keramikmembran weist typischerweise einen Durchmesser auf, der wenigstens so groß ist wie ein Außendurchmesser der Druckmesszelle. Bei einer einstückig mit dem Prozessanschluss ausgebildeten Keramikmembran entspricht der Durchmesser der Keramikmembran idealerweise dem Durchmesser der Druckmesszelle, wobei diese dann in den Aufnahmeraum eingepasst ist. Ist die Keramikmembran an dem Aufnahmeabschnitt vorderseitig angeordnet, so wird ein Durchmesser der Keramikmembran typischerweise größer als ein Außendurchmesser der Druckmesszelle sein, so dass in Axialrichtung gesehen zwischen der Keramikmembran und dem Aufnahmeabschnitt die Verglasung angeordnet ist.

Zum Ausgleich unterschiedlicher Membrandicken kann an dem Aufnahmeabschnitt ein Ausgleichsring, wie bereits erwähnt, in Axialrichtung vorderseitig aber auch rückseitig angeordnet sein. Auf diese Weise können unterschiedliche Membrandicken, die beispielsweise für unterschiedliche Messbereiche und/oder Einsatzzwecke benötigt werden, ausgeglichen werden und eine frontbündige und plane Anordnung des Prozessanschlusses in einem Flansch gewährleistet werden.

Dadurch, dass die Druckmesszelle eine eigene Messmembran aufweist, die mit der Keramikmembran verbunden ist, ist eine separat handhabbare Druckmesszelle in dem Prozessanschluss angeordnet, wobei durch den Prozessanschluss eine zum Prozess hin geschlossene Oberfläche erreicht wird und die Messgröße, d. h. insbesondere der zu messende Druck über die Keramikmembran an die Messmembran gekoppelt wird. Insbesondere kann die Messmembran mit der Keramikmembran verklebt oder verglast sein. Hierbei wird insbesondere auf die Zwischenschaltung eines zusätzlichen Druckmittlermediums verzichtet.

Die Keramikmembran kann beispielsweise eine Dicke von 50 pm bis zu einer Dicke von 200 pm aufweisen, wobei in diesem Fall eine Ausgestaltung mit einer in den Prozessanschluss eingefügten Druckmesszelle mit einer eigenen Messmembran bevorzugt wird.

Bei einem Verfahren zum Herstellen einer Druckmessanordnung mit einer keramischen Druckmesszelle und einem wenigstens abschnittsweise keramischen Prozessanschluss mit einer Keramikmembran kann erfindungsgemäß eine separat handhabbare Druckmesszelle mit einer eigenen Messmembran in dem Prozessan schluss befestigt, vorzugsweise in dem Prozessanschluss eingeglast bzw. eingeklebt werden. Bei einer derartigen Ausgestaltung können handelsübliche keramische Druckmesszellen verwendet werden, so dass auf Standardbauelemente zurückgegriffen werden kann.

Die vorliegende Erfindung wird nachfolgend unter Bezugnahme auf die beigefügten Figuren eingehend erläutert.

Es zeigen:
- Figur 1: eine Schnittdarstellung einer Druckmessanordnung mit einem keramischen Prozessanschluss mit einstückig angeformter Keramikmembran,
- Figur 2: eine Ausschnittsvergrößerung aus Figur 1,
- Figur 3: eine Schnittdarstellung einer Druckmessanordnung mit keramischem Prozessanschluss mit separat angeformter Keramikmembran,
- Figur 4: eine Ausschnittsvergrößerung aus Figur 3,
- Figur 5: eine Schnittdarstellung einer Druckmessanordnung mit einem Prozessanschluss aus einer Kombination aus Edelstahl und Keramik mit einstückig angeformter Keramikmembran,
- Figur 6: eine Ausschnittsvergrößerung aus Figur 5,
- Figur 7: einen Längsschnitt durch ein weiteres Ausführungsbeispiel einer Druckmessanordnung mit einem keramischen Prozessanschluss und einer über einen Ausgleichsring an dem Prozessanschluss angeordneten Keramikmembran,
- Figur 8: eine Ausschnittsvergrößerung aus Figur 7,
- Figur 9: einen Längsschnitt durch eine Druckmessanordnung mit einem Prozessanschluss gemäß dem Stand der Technik (schon behandelt) und
- Figur 10: eine Ausschnittsvergrößerung aus Figur 9.

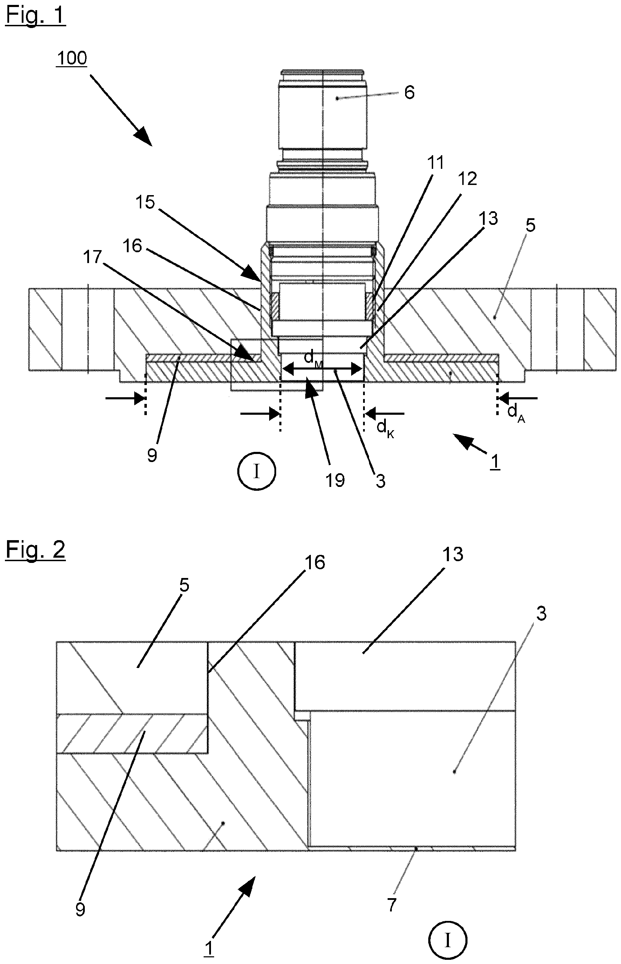

Figur 1 zeigt einen Längsschnitt durch ein erstes Ausführungsbeispiel einer Druckmessanordnung 100, die im Wesentlichen aus einer mittels eines Prozessanschlusses 1 in einem Flansch 5 angeordnete Druckmesszelle 3 besteht. Mittels des Prozessanschlusses 1 ist die Druckmesszelle 3 derart in einer Messumgebung I anordenbar, dass eine zu messende Messgröße, vorliegend der Druck, an die Druckmesszelle 3 angekoppelt und von dieser in ein elektrisches Signal geführt werden kann. Die Druckmesszelle 3 kann dabei beispielsweise als kapazitive Druckmesszelle 3 ausgebildet sein, die aus einem keramischen Werkstoff gefertigt ist. Bei derartigen kapazitiven Druckmesszellen 3 ist typischerweise eine Messmembran über einen Abstandshalter an einem Grundkörper der Druckmesszelle 3 angeordnet, wobei der Grundkörper und die Messmembran an zueinander gewandten und gegenüberliegenden Seiten Metallisierungen tragen, die eine Messkapazität bilden. Mittels dieser Messkapazität ist dann eine druckinduzierte Abstandsänderung zwischen der Messmembran und dem Grundkörper in ein Messsignal überführbar, das den anliegenden Druck repräsentiert.

Im vorliegenden Ausführungsbeispiel ist an dem Prozessanschluss 1 rückseitig, d. h. von der Prozessumgebung I abgewandt ein Gehäuseanschluss 6 angeordnet, der beispielsweise zur Anordnung eines Messgerätegehäuses oder als Kabelabgang genutzt werden kann. Der Prozessanschluss 1 ist im Wesentlichen rohrförmig ausgestaltet, wobei er an einem der Prozessumgebung I zugewandten Ende einen umlaufenden Kragen aufweist, der den Prozessanschluss 1 in Radialrichtung ringförmig vergrößert. An einem rohrförmigen Befestigungsabschnitt 15 schließt sich ein ebenfalls rohrförmig ausgebildeter und von dem Kragen umgebender Aufnahmeabschnitt 17 an, in dem die Druckmesszelle 3 sitzt. In dem Aufnahmeabschnitt 17 ist ein kreiszylindrisch ausgebildeter Aufnahmeraum 19 gebildet, der vorderseitig von einer Keramikmembran 7 des Prozessanschlusses 1 zur Prozessumgebung I hin abgeschlossen ist. In dem Befestigungsabschnitt 15 weist der Prozessanschluss 1 ein Innengewinde 12 auf, in das ein Spannring 11 mit einem dazu korrespondierenden Gewinde eingedreht ist. Durch den Spannring 11 wird durch einen Mitnehmer 13 die Druckmesszelle 3 in Axialrichtung in dem Prozessanschluss fixiert und kann in Richtung der Prozessumgebung I vorgespannt sein.

Der Prozessanschluss 1 ist in dem Flansch 5 fixiert, beispielsweise mit diesem verschweißt. Um eine frontbündige Anordnung des Prozessanschlusses 1 im Flansch 5 zu erreichen ist außerdem eine ringförmige Ausgleichsscheibe 9 vorgesehen, die zwischen dem Prozessanschluss 1 und dem Flansch 5 angeordnet ist.

Der umlaufende Kragen im Bereich des Aufnahmeabschnitts 17 des Prozessanschlusses 1 weist im vorliegenden Ausführungsbeispiel einen Außendurchmesser d_{A} auf, der im Wesentlichen einen 4,5 fachen eines Durchmessers d_{M} der Druckmesszelle entspricht. Durch diesen Kragen wird im Wesentlichen der von der Prozessumgebung her wirkende Druck aufgenommen und an den Flansch 5 weitergegeben. Ein Durchmesser d_{K} der integral an dem Prozessanschluss 1 angeformten Keramikmembran 7 entspricht im Wesentlichen dem Durchmesser d_{M} der Druckmesszelle 3.

Der Durchmesser d_{A} richtet sich nach der Dichtfläche des Flanches 5 und der Größe einer zu einem Behälter hin angeordneten Flachdichtung. Ziel ist es den Übergang Flansch/Keramik in der Bereich der Flachdichtung zu legen und diese Dichtstelle auch für die Abdichtung gegenüber dem Behälter zu verwenden.

Der Prozessanschluss 1 kann in den Flansch 5 alternativ zu einer Befestigung über ein Außengewinde auch beispielsweise eingeklebt sein. Alternativ dazu kann der Flansch 5 verklebt oder mittels einer Lötverbindung mit dem Prozessanschluss 1 verbunden sein oder eine andere geeignete Verbindungstechnik gewählt werden.

In Figur 2 ist eine Ausschnittsvergrößerung der Druckmessanordnung 100 aus Figur 1 gezeigt.

Aus dem in Figur 2 dargestellten Ausschnitt ist besonders deutlich die einstückige Ausformung des Prozessanschlusses 1 und der Keramikmembran 7 zu erkennen. Die vergleichsweise komplexe Struktur des Prozessanschlusses 1 mit der einstückig angeformten Keramikmembran 7 sowie beispielsweise dem angeformten Innengewinde 12 kann besonders günstig durch ein Keramikspritzgussverfahren hergestellt werden.
Bei einem Pulverspritzgießen (PIM: Powder Injection Molding) wird ein mit einem Binder versehenes Keramikpulver in einem Spritzgussprozess (CIM: Ceramic Injection Molding) verarbeitet. Der Binder wird anschließend in einem Entbinderungsprozess entfernt. Nach der Entbinderung enthält man den sogenannten Weißteil oder Weißling diese Teile sind noch sehr porös und haben nur eine minimale Festigkeit. Der Weißling wird durch einem weiterem thermischen Prozess verdichtet (Sinterung). Durch diesen Prozess ist es möglich komplexe Keramikteil, mit niedrigen Toleranzen herzustellen.

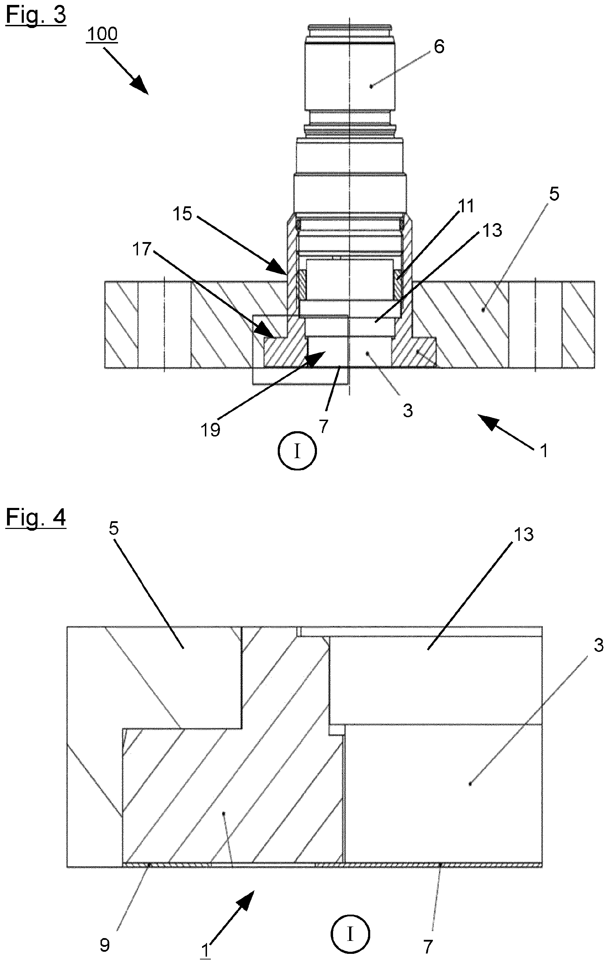

Figur 3 zeigt einen Schnitt durch ein zweites Ausführungsbeispiel einer Druckmessanordnung 100, wobei sich die Druckmessanordnung 100 im Wesentlichen durch die Ausgestaltung des Prozessanschlusses 1 von dem Ausführungsbeispiel der Figuren 1 und 2 unterscheidet.

Der Prozessanschluss 1 ist im vorliegenden Ausführungsbeispiel ebenfalls aus Keramik gefertigt, wobei der im Bereich des Aufnahmeabschnittes 17, in dem die Druckmesszelle 3 angeordnet ist, angeordnete Kragen mit einem reduzierten Durchmesser d_{A} ausgebildet ist. In dem in Figur 3 dargestellten Ausführungsbeispiel beträgt der Durchmesser d_{A} des Aufnahmeabschnittes 17 in etwa den doppelten Durchmesser d_{M} der Druckmesszelle 3. Als weiterer Unterschied ist die Membran 7 im vorliegenden Ausführungsbeispiel separat hergestellt und an dem Aufnahmeabschnitt 17 des Prozessanschlusses 1 befestigt. Die Keramikmembran 7 ist dabei über eine Glaslotverbindung an den Aufnahmeabschnitt 17 angeglast und verschließt damit den Aufnahmeraum 19 zur Prozessumgebung I hin sowohl medien- als auch diffusionsdicht.

Der Durchmesser d_{K} der Keramikmembran 7 beträgt in dem in Figur 3 dargestellten Ausführungsbeispiel ca. 10% mehr als der Durchmesser d_{M} der Druckmesszelle 3 bzw. des Aufnahmeraums, so dass eine umlaufende Fügung der Keramikmembran 7 mit dem Aufnahmeabschnitt 17 ermöglicht wird. Zum Ausgleich einer Stufe, die entsteht, da der Durchmesser d_{K} der Keramikmembran 7 geringer ist als der Durchmesser d_{A} des Aufnahmeabschnittes 17, ist die Ausgleichsscheibe 9 im vorliegenden Ausführungsbeispiel mit zur Keramikmembran 7 identischer Dicke und die Keramikmembran 7 ringförmig umgebend ausgebildet. Auf diese Weise kann eine frontbündige Anordnung des Prozessanschlusses 1 in dem Flansch 5 erreicht werden.

In dem in den Figuren 3 und 4 dargestellten Ausführungsbeispiel kann die Keramikmembran 7 innenseitig, d. h. auf der von der Prozessumgebung I abgewandten Seite beispielsweise mit einer Metallisierung versehen sein, so dass die Druckmesszelle 3 ohne eigene Messmembran unmittelbar auf der Keramikmembran 7 angeordnet sein kann. Der Prozessanschluss 1 und die Druckmesszelle 3 sind in diesem Fall integral ausgebildet und bilden eine Einheit.

Die Metallisierung auf der Innenseite der Keramikmembran 7 kann beispielsweise mittels Durchkontaktierung durch einen Grundkörper der Druckmesszelle 3 elektrisch mit einer Messelektronik verbunden sein, so dass eine Messwertermittlung wie im Stand der Technik bekannt erfolgen kann.

Während die Keramikmembran 7 bei Verwendung einer aus dem Stand der Technik bekannten Druckmesszelle 3 mit einer eigenen Messmembran mit einer Dicke von beispielsweise 50 µm bis 200 µm ausgebildet sein kann und dadurch auf einen Messwert der Druckmesszelle 3 annähernd keinen Einfluss ausübt ist es bei einer integralen Ausgestaltung von Druckmesszelle 3 und Prozessanschluss 1 notwendig, die Keramikmembran 7 auf den gewünschten Messbereich abzustimmen. Typische Dicken einer solchen als Messmembran verwendeten Keramikmembran 7 liegen zwischen 0,1 mm und 3 mm, woran dann idealerweise auch die Ausgleichsscheibe 9 anzupassen ist.

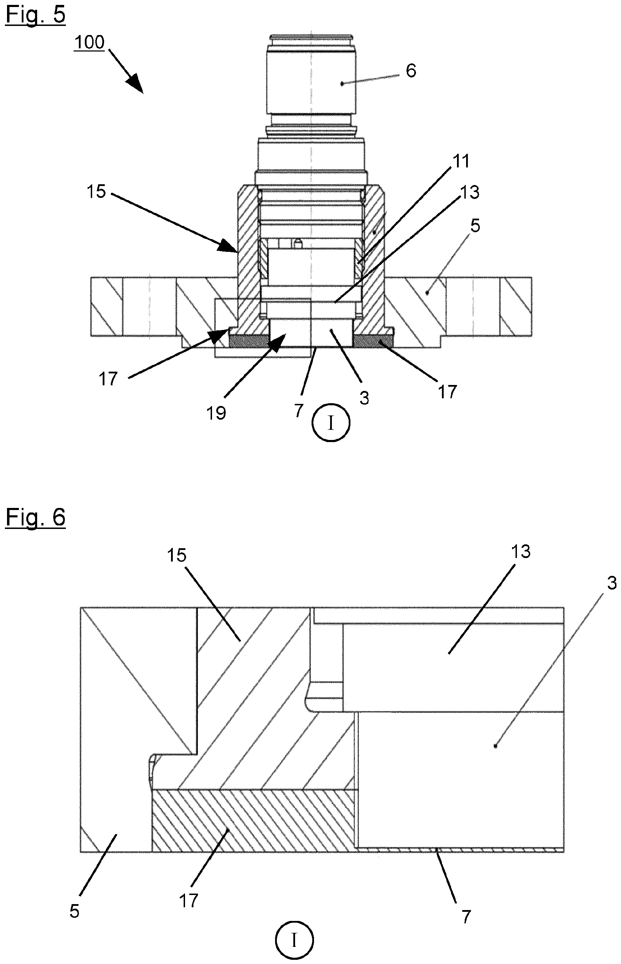

Figur 5 zeigt ein weiteres Ausführungsbeispiel einer Druckmessanordnung 100, wobei der Prozessanschluss 1 in dem in Figur 5 gezeigten Ausführungsbeispiel einen hybriden Aufbau aus Metall und Keramik aufweist. In dem in Figur 5 dargestellten Ausführungsbeispiel ist der Befestigungsabschnitt 15 des Prozessanschlusses 1 aus Metall, beispielsweise Titan oder Edelstahl gefertigt, wobei der Aufnahmeabschnitt 17 in einem hinteren von der Prozessumgebung I abgewandten Bereich aus Metall und in dem der Prozessumgebung I zugewandten Bereich aus Keramik gefertigt ist. In dem vorliegenden Ausführungsbeispiel ist ein aus einem umlaufenden Ring mit einer integral angeformten Keramikmembran 7 gebildetes Element axial vorderseitig angeordnet und mit dem Befestigungsabschnitt 15 aus Metall verbunden. Eine Verbindung kann beispielsweise durch eine Verklebung oder einer Lötung mittels Hartlot erfolgen. Durch eine derartige Ausgestaltung können einerseits die positiven Eigenschaften der Keramik zur Prozessumgebung I hin und andererseits die guten Bearbeitungs- und Verbindungstechniken für metallische Bauelemente zum Flansch 5 ausgenutzt werden. Insbesondere zur Prozessumgebung I hin sind dabei die guten Eigenschaften der Keramik hinsichtlich Abrasionsfestigkeit und Diffusionsdichtigkeit hervorzuheben, wobei eine Befestigung an dem Flansch 5 beispielsweise durch eine umlaufende Verschweißung erfolgen kann.

In Figur 6 ist eine Ausschnittsvergrößerung der Anordnung aus Figur 5 gezeigt, wobei in dieser Darstellung die einstückige, d. h. einteilige Ausgestaltung von Keramikmembran 7 und Aufnahmeabschnitt 17 im vorderen Bereich besonders deutlich zu erkennen sind.

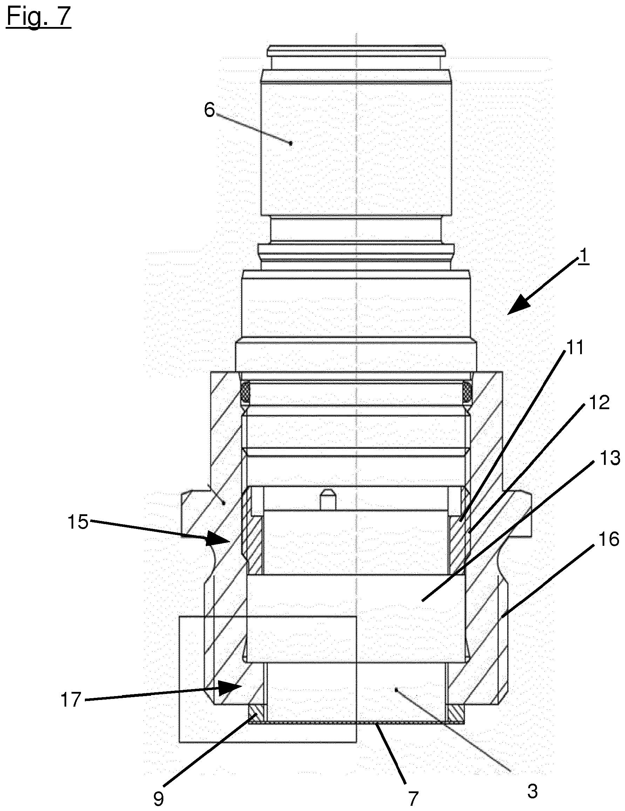

Figur 7 zeigt eine alternative Ausgestaltungsform einer Druckmessanordnung 100 mit einem Prozessanschluss 1 mit einer an dem Aufnahmeabschnitt 17 befestigten Keramikmembran 7. Die Keramikmembran 7 ist in dem vorliegenden Ausführungsbeispiel über den Ausgleichsring 9 an dem Aufnahmeabschnitt 17 befestigt, so dass durch eine entsprechende Auswahl des Ausgleichsrings 9 unterschiedliche Anordnungen und Bautiefen in Axialrichtung gesehen möglich sind (es ist dadurch möglich Unterschiedliche Membrandicken/ Messbereiche der Druckmesszelle auszugleichen). Der Prozessanschluss 1 gemäß Figur 7 weist ein Außengewinde 16 auf, mittels dessen der Prozessanschluss 1 in einen Behälter einschraubbar ist. Die übrigen Elemente entsprechen im Wesentlichen den vorherigen Ausgestaltungsformen, so dass an dieser Stelle nicht weiter auf diese eingegangen werden soll.

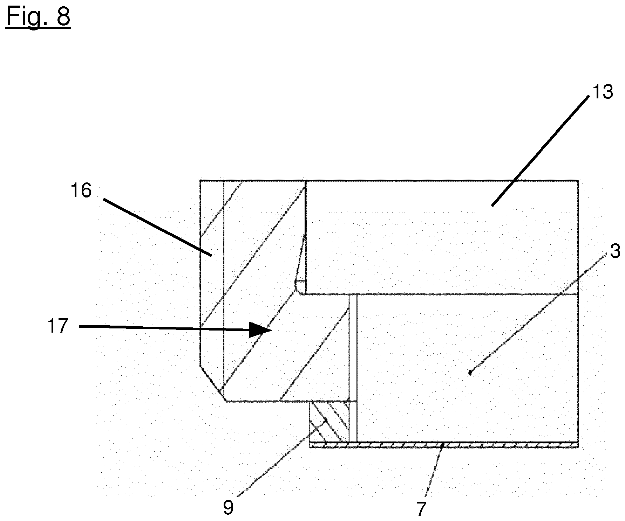

In Figur 8 ist eine Ausschnittsvergrößerung der Anordnung aus Figur 7 gezeigt, wobei in dieser Darstellung besonders deutlich die Anordnung der Keramikmembran 7 an dem Ausgleichsring 9 zu erkennen ist. Sowohl zwischen der Keramikmembran 7 und dem Ausgleichsring 9 als auch zwischen dem Ausgleichsring 9 und dem Aufnahmeabschnitt 17 ist jeweils eine Glasfügung vorgesehen, mittels derer die jeweiligen Elemente aneinander befestigt sind.

Es sei an dieser Stelle nochmals angemerkt, dass sowohl bei einer integralen Ausgestaltung von Keramikmembran 7 und Aufnahmeabschnitt 17 als auch bei einer Variante, bei der die Keramikmembran 7 über eine Fügung an dem Aufnahmeabschnitt 17 angeordnet ist. Die Keramikmembran 7 jeweils als Messmembran für die Druckmesszelle 3 ausgestaltet sein kann. In sämtlichen Ausgestaltungsformen ist es außerdem möglich, dass die Keramikmembran 7 derart dünn ausgestaltet wird, dass sie einen einwirkenden Druck lediglich unter geringer Messwertbeeinträchtigung an die Druckmesszelle 3 weitergibt und damit eine Dichtungsfreie und somit medien- und diffussionsdichte Anordnung der Druckmesszelle 3 ermöglicht. Die Druckmesszelle 3 kann in diesen Ausgestaltungsformen in den Prozessanschluss 1 beispielsweise eingeklebt, eingeglast oder lediglich von ihrer Rückseite her eingespannt sein.

### Bezugszeichenliste

- 1: Prozessanschluss
- 3: Druckmesszelle
- 5: Flansch
- 6: Gehäuseanschluss
- 7: Keramikmembran
- 9: Ausgleichscheibe
- 11: Spannring
- 12: Innengewinde
- 13: Mitnehmer
- 15: Befestigungsabschnitt
- 16: Außengewinde
- 17: Aufnahmeabschnitt
- 19: Aufnahmeraum
- 70: Dichtungen
- 100: Druckmessanordnung
- I: Prozessumgebung
- d_{A}: Durchmesser Aufnahmeabschnitt
- d_{K}: Durchmesser Keramikmembran
- d_{M}: Durchmesser Messzelle

## Patentansprüche

1. Druckmessanordnung (100) mit einer in einem Prozessanschluss (1) angeordneten Druckmesszelle (3), wobei der Prozessanschluss (1) zur Aufnahme der Druckmesszelle (3) und zur Ankopplung derselben an eine Prozessumgebung (I), mit einem Befestigungsabschnitt (15) und einem Aufnahmeabschnitt (17) mit einem Aufnahmeraum (19) für wenigstens einen Grundkörper der Druckmesszelle (3) versehen ist, wobei der Prozessanschluss (1) wenigstens in einem an die Prozessumgebung (I) grenzenden Abschnitt aus Keramik gefertigt ist und zumindest eine den Aufnahmeraum (19) zur Prozessumgebung (I) hin abschließende Keramikmembran (7) umfasst,
**dadurch gekennzeichnet, dass**
die Druckmesszelle (3) eine eigene Messmembran aufweist, die mit der Keramikmembran (7) verbunden ist.

2. Druckmessanordnung (100) gemäß Anspruch 1,
**dadurch gekennzeichnet, dass** der Aufnahmeabschnitt (17) und die Keramikmembran (7) einstückig ausgebildet sind.

3. Druckmessanordnung (100) gemäß einem der vorhergehenden Ansprüche"
**dadurch gekennzeichnet, dass**
der Befestigungsabschnitt (15) aus Keramik gefertigt ist.

4. Druckmessanordnung (100) gemäß Anspruch 3,
**dadurch gekennzeichnet, dass** der Befestigungsabschnitt (15) wenigstens ein Gewinde vorzugsweise ein Außengewinde (16) und/oder ein Innengewinde (12) umfasst.

5. Druckmessanordnung (100) gemäß einem der vorhergehenden Ansprüche,
**dadurch gekennzeichnet, dass** der Aufnahmeabschnitt (17) aus Keramik gefertigt ist.

6. Druckmessanordnung (100) gemäß Anspruch 5,
**dadurch gekennzeichnet, dass** die Keramikmembran (7) an dem Aufnahmeabschnitt (17) befestigt ist.

7. Druckmessanordnung (100) gemäß Anspruch 6,
**dadurch gekennzeichnet, dass** die Keramikmembran (7) an den Aufnahmeabschnitt (17) angeglast ist.

8. Druckmessanordnung (100) gemäß Anspruch 7,
**dadurch gekennzeichnet, dass** der Aufnahmeabschnitt (17) einen Durchmesser (d_{A}) aufweist, der größer ist als ein Durchmesser (d_{K}) der Keramikmembran (7) .

9. Druckmessanordnung (100) gemäß einem der vorhergehenden Ansprüche,
**dadurch gekennzeichnet, dass** die Keramikmembran (7) einen Durchmesser (d_{K}) aufweist, der wenigstens so groß ist wie ein Durchmesser (d_{M}) der Messzelle.

10. Druckmessanordnung (100) gemäß Anspruch 8,
**dadurch gekennzeichnet, dass** an dem Aufnahmeabschnitt (17) ein Ausgleichsring (9) angeordnet ist.

11. Druckmessanordnung (100) gemäß Anspruch 1,
**dadurch gekennzeichnet, dass** die Messmembran mit der Keramikmembran (7) verklebt oder verglast ist.

12. Druckmessanordnung (100) gemäß einem der vorhergehenden Ansprüche,
**dadurch gekennzeichnet, dass** die Keramikmembran (7) eine Dicke von 50 µm bis 1000 µm, vorzugsweise 500 µm, aufweist.

13. Verfahren zum Herstellen einer Druckmessanordnung (100) gemäß Anspruch 1,
**dadurch gekennzeichnet, dass** eine separat handhabbare Druckmesszelle (3) mit einer eigenen Messmembran in dem Prozessanschluss (1) befestigt, vorzugsweise in den Prozessanschluss (1) eingeglast oder eingeklebt wird.

## Claims

1. A pressure measuring assembly (100) with a pressure measuring cell (3) disposed in a process connection (1), wherein the process connection (1) for accommodating the pressure measuring cell (3) and coupling the same to a process environment (I) is provided with a fastening portion (15) and an accommodating portion (17) with an accommodating space (19) for at least one base body of the pressure measuring cell (3), wherein the process connection (1), at least in a portion adjacent to the process environment (I), is made from ceramic and comprises at least one ceramic diaphragm (7) sealing the accommodating space (19) from the process environment (I),
**characterized in that** the pressure measuring cell (3) has its own measuring diaphragm, which is connected to the ceramic diaphragm (7).

2. The pressure measuring assembly (100) according to claim 1,
**characterized in that** the accommodating portion (17) and the ceramic diaphragm (7) are integrally formed.

3. The pressure measuring assembly (100) according to any one of the preceding claims,
**characterized in that** the fastening portion (15) is made from ceramic.

4. The pressure measuring assembly (100) according to claim 3,
**characterized in that** the fastening portion (15) comprises at least one thread, preferably an external thread (16) and/or an internal thread (12).

5. The pressure measuring assembly (100) according to any one of the preceding claims,
**characterized in that** the accommodating portion (17) is made from ceramic.

6. The pressure measuring assembly (100) according to claim 5, **characterized in that** the ceramic diaphragm (7) is attached to the accommodating portion (17).

7. The pressure measuring assembly (100) according to claim 6,
**characterized in that** the ceramic diaphragm (7) is glass-bonded to the accommodating portion (17).

8. The pressure measuring assembly (100) according to claim 7,
**characterized in that** the accommodating portion (17) has a diameter (d_{A}) which is greater than a diameter (d_{K}) of the ceramic diaphragm (7).

9. The pressure measuring assembly (100) according to any one of the preceding claims,
**characterized in that** the ceramic diaphragm (7) has a diameter (d_{K}) which is at least as large as a diameter (d_{M}) of the measuring cell.

10. The pressure measuring assembly (100) according to claim 8,
**characterized in that** a spacing ring (9) is disposed on the accommodating portion (17).

11. The pressure measuring assembly (100) according to claim 1,
**characterized in that** the measuring diaphragm is glued or glass-connected to the ceramic diaphragm (7).

12. The pressure measuring assembly (100) according to any one of the preceding claims,
**characterized in that** the ceramic diaphragm (7) has a thickness of 50 µm to 1000 µm, preferably of 500 µm.

13. A method for producing a pressure measuring assembly (100) according to claim 1,
**characterized in that** a pressure measuring cell (3), which can be handled separately, with its own measuring diaphragm, is fastened in the process connection (1), preferably glass-sealed or glued into the process connection (1).

## Revendications

1. Ensemble de mesure de pression (100) comprenant une cellule de mesure de pression (3) disposée dans un raccord de processus (1), dans lequel, pour recevoir la cellule de mesure de pression (3) et pour coupler celle-ci à un environnement de processus (I), le raccord de processus (1) est pourvu d'une section de fixation (15) et d'une section de réception (17) ayant un espace de logement (19) pour au moins un corps de base de la cellule de mesure de pression (3), dans lequel ledit raccord de processus (1) est fabriqué à partir de céramique au moins dans une section contiguë à l'environnement de processus (I) et comprend au moins une membrane en céramique (7) qui ferme ledit espace de logement (19) vers l'environnement de processus (I), **caractérisé par le fait que** la cellule de mesure de pression (3) présente une propre membrane de mesure qui est reliée à la membrane en céramique (7).

2. Ensemble de mesure de pression (100) selon la revendication 1, **caractérisé par le fait que** la section de réception (17) et la membrane en céramique (7) sont réalisées en une seule pièce.

3. Ensemble de mesure de pression (100) selon l'une quelconque des revendications précédentes, **caractérisé par le fait que** la section de fixation (15) est fabriquée à partir de céramique.

4. Ensemble de mesure de pression (100) selon la revendication 3, **caractérisé par le fait que** la section de fixation (15) comprend au moins un filetage, de préférence un filetage extérieur (16) et/ou un filetage intérieur (12).

5. Ensemble de mesure de pression (100) selon l'une quelconque des revendications précédentes, **caractérisé par le fait que** la section de réception (17) est fabriquée à partir de céramique.

6. Ensemble de mesure de pression (100) selon la revendication 5, **caractérisé par le fait que** la membrane en céramique (7) est fixée sur la section de réception (17).

7. Ensemble de mesure de pression (100) selon la revendication 6, **caractérisé par le fait que** la membrane en céramique (7) est reliée par un verre de soudure à la section de réception (17).

8. Ensemble de mesure de pression (100) selon la revendication 7, **caractérisé par le fait que** la section de réception (17) présente un diamètre (d_{A}) qui est supérieur à un diamètre (d_{K}) de la membrane en céramique (7).

9. Ensemble de mesure de pression (100) selon l'une quelconque des revendications précédentes, **caractérisé par le fait que** la membrane en céramique (7) présente un diamètre (d_{K}) qui est au moins aussi grand qu'un diamètre (d_{M}) de la cellule de mesure.

10. Ensemble de mesure de pression (100) selon la revendication 8, **caractérisé par le fait qu'**un anneau de compensation (9) est disposé sur la section de réception (17).

11. Ensemble de mesure de pression (100) selon la revendication 1, **caractérisé par le fait que** la membrane de mesure est reliée par collage ou un verre de soudure à la membrane en céramique (7).

12. Ensemble de mesure de pression (100) selon l'une quelconque des revendications précédentes, **caractérisé par le fait que** la membrane en céramique (7) présente une épaisseur comprise 50 µm et 1000 µm, de préférence de 500 µm.

13. Procédé de fabrication d'un ensemble de mesure de pression (100) selon la revendication 1, **caractérisé par le fait qu'**une cellule de mesure de pression (3) apte à être maniée séparément et ayant une propre membrane de mesure est fixée dans le raccord de processus (1), de préférence est fixée par un verre de soudure ou par collage dans le raccord de processus (1).
